# EUROPÄISCHE PATENTSCHRIFT

(11) **EP 1 184 946 B1**
(45) Veröffentlichungstag und Bekanntmachung des Hinweises auf die Patenterteilung: **18.08.2010**
(21) Anmeldenummer: 00118825.9
(22) Anmeldetag: 31.08.2000
(51) Int. Cl.: H01S 3/098, H01S 3/07

(54) **Gaslaser**
Gaslaser
Laser à gaz

(43) Veröffentlichungstag der Anmeldung: 06.03.2002
(73) Patentinhaber: Trumpf Laser- und Systemtechnik GmbH, 71254 Ditzingen (DE)
(72) Erfinder: Von Borstel, Michael, Dr., 74385 Pleidelsheim (DE); Geschwandner, Mark, 70839 Gerlingen (DE); Behrends, Tanja, 71254 Ditzingen (DE)
(74) Vertreter: Kohler Schmid Möbus

(56) Entgegenhaltungen:
- GB-A- 2 117 558
- US-A- 4 491 950
- PATENT ABSTRACTS OF JAPAN vol. 8, no. 115 (E-247) [1552], 29. Mai 1984 (1984-05-29) & JP 59 029481 A (SHINWA BOUEKI), 16. Februar 1984 (1984-02-16)

## Beschreibung

Die Erfindung betrifft einen Gaslaser mit einer Optik und mit einer im Strahlführungsraum des Laserresonators vorgesehenen Modenblende, die aus dem Laserstrahl Moden ab höheren Ordnungen ausblendet.

Ein derartiger Gaslaser ist beispielsweise durch die GB-A-2 117 558 bekanntgeworden.

In der Regel erzeugt ein Gaslaser im Laserresonator einen für ihn charakteristischen Schwingungszustand, den sog. Mode, der im wesentlichen durch die Länge des Laserresonators, den Durchmesser der Laserrohre und die Gestaltung der Elektroden festgelegt ist. Wie ein Laser ausgelegt wird und welchen Mode er folglich erzeugt, hängt von seinem Einsatzgebiet ab. Für die Materialbearbeitung sind zwei Moden von besonderer Bedeutung - der TEM₀₀-Mode (sogenannter Gauß-Mode) und der TEM_{01*}-Mode (sogenannter Ringmode). Der Gauß-Mode kann auf den kleinsten Durchmesser fokussiert werden, was beim Schneiden dünner Bleche erwünscht ist. Der Ringmode ist schlechter fokussierbar als der Gauß-Mode, so daß der Fokusdurchmesser daher größer ist. Dies ist z.B. beim Schneiden dickerer Bleche erwünscht, damit der Schnittspalt so breit ist, daß die Schlacke ausgeblasen werden kann. In der Mitte des Ringmodes befindet sich ein Leistungsminimum, wodurch die thermische Belastung in der Mitte der optischen Elemente verringert wird - ein Effekt, der vor allem bei hohen Leistungen wichtig ist.

In der Vergangenheit hat es zahlreiche Versuche gegeben, bei einem Gaslaser den Mode im Laserresonator definiert einzustellen.

Der aus der eingangs genannten GB-A-2 117 558 bekannte Gaslaser verwendet als Laserresonator ein oder mehrere Laserrohre, deren Durchmesser an der Rohröffnung bzw. innerhalb des Laserrohres jeweils so klein gewählt sind, dass sich nur die Grundmode (TEM₀₀-Mode) im Laserresonator unverzerrt ausbilden kann. Die Laserrohre wirken somit als Modenblenden, die aus aus Laserstrahl Moden höherer Ordnung als die Grundmode ausblenden.

Weiterhin ist es aus der EP 0 492 340 B1 bekannt, als Modenblenden zwei im Laserresonator längsverstellbare Lochblenden vorzusehen, durch welche der Laserstrahl in seinem Durchmesser verkleinert werden kann. In einer ersten Einstellung befinden sich die beiden Modenblenden außerhalb des Laserstrahls, so daß dieser ungehindert mit vollem Durchmesser am Außenspiegel austreten kann. In einer zweiten Einstellung befinden sich beide Modenblenden im Strahlengang, so daß der Durchmesser des Laserstrahls etwa um die Hälfte verringert wird. Zur Längsverschiebung der Modenblenden ist ein mechanisch aufwendiger Zylinderantrieb vorgesehen.

Demgegenüber ist es die Aufgabe der Erfindung, einen Gaslaser der eingangs genannten Art derart zu verbessern, daß für unterschiedliche Bearbeitungsaufgaben zwischen zwei verschiedenen Moden auf möglichst einfache Weise umgeschaltet werden kann.

Diese Aufgabe wird erfindungsgemäß dadurch gelöst, daß die Optik mindestens zwei adaptive optische Elemente aufweist, die zwischen zwei Einstellungen verstellbar sind, bei denen die Modenblende aus dem Laserstrahl Moden ab jeweils anderen höheren Ordnungen ausblendet, wobei die Modenblende zwischen zwei adaptiven optischen Elementen angeordnet ist, und die adaptiven optischen Elemente durch eine Steuereinrichtung einstellbar sind, und wobei das eine adaptive optische Element zum Aufweiten des Laserstrahls und das andere adaptive optische Element zum Rückfokussieren des aufgeweiteten Laserstrahls dient.

Der mit der Erfindung erzielte Vorteil besteht darin, daß im Laserresonator z.B. in der einen Einstellung der Gauß-Mode und in der anderen Einstellung der Ringmode erzeugt werden kann. Entsprechend der jeweiligen Bearbeitungsaufgabe kann mit Hilfe einer geeigneten Steuerung zwischen dem Gauß- oder dem Ringmode umgeschaltet werden. Das mindestens eine adaptive optische Element kann z.B. ein adaptiver Spiegel sein, dessen Spiegelfläche z.B. mittels Variation des Kühlwasserdrucks verformbar ist. Die jeweils gewünschte Krümmung des adaptiven Spiegels läßt sich über eine Steuereinrichtung dann entsprechend einstellen.

Vorzugsweise ist die Modenblende zwischen zwei adaptiven optischen Elementen angeordnet, wobei das eine optische Element zum Aufweiten des Laserstrahls und das andere optische Element zum Rückfokussieren des aufgeweiteten Laserstrahls dient.

Vorzugsweise sind zumindest in einer der beiden Optikeinstellungen ein oder zwei adaptive optische Elemente zur Aufweitung des Laserstrahls, insbesondere konvex, und ein anderes adaptives optisches Element zur nachfolgenden Fokussierung des Laserstrahls, insbesondere konkav, ausgebildet.

Als adaptive optische Elemente können bereits im Strahlengang vorhandene Elemente des Laserresonators genutzt werden, wie z.B. der Auskoppelspiegel und/oder der Rückspiegel des Laserresonators und/oder ein oder mehrere dazwischen vorgesehene Umlenkspiegel. Wird der Rückspiegel zur Aufweitung oder zur Fokussierung genutzt, ist zu beachten, daß er in der Regel ohnehin eine Krümmung aufweist, damit der Laserresonator stabil ist. Die tatsächliche Krümmung des Rückspiegels ergibt sich dann durch einfache Addition der beiden Krümmungen unter Beachtung der jeweiligen Vorzeichen. Als aktivierbare optische Elemente können zum Beispiel mindestens zwei benachbarte adaptive Umlenkspiegel oder zusätzlich noch der Rückspiegel vorgesehen sein. Vorzugsweise sind als aktivierbare optische Elemente drei adaptive Umlenkspiegel vorgesehen.

Versuche mit einem doppelt quadratisch gefalteten Resonator haben gezeigt, daß bei mindestens zwei optischen Elementen besonders gute Ergebnisse, d.h. ein Laserstrahl im Gauß-Mode mit besonders hoher Strahlqualität, erzielt werden, wenn das eine optische Element zur Aufweitung des Laserstrahls, insbesondere konvex, und das andere optische Element zur nachfolgenden Fokussierung des Laserstrahls, insbesondere konkav, ausgebildet ist. Versuche mit einem doppelt quadratisch gefalteten Resonator haben weiter gezeigt, daß bei mindestens drei optischen Elementen besonders gute Ergebnisse, d.h. einen Laserstrahl im Gauß-Mode mit besonders hoher Strahlqualität, erzielt werden, wenn zwei optische Elemente zur Aufweitung des Laserstrahls, insbesondere konvex, und das andere optische Elemente zur Fokussierung des Laserstrahls, insbesondere konkav, ausgebildet sind. Vorzugsweise ist der Radius des einen konkaven optischen Elements jeweils kleiner als die Radien der konvexen optischen Elemente und sind die Radien dieser konvexen optischen Elemente in etwa gleich. Besonders gute Ergebnisse, d.h. ein Laserstrahl im Gauß-Mode mit besonders hoher Strahlqualität, sind zu erreichen, wenn ein konvexer Umlenkspiegel in der Nähe des Auskoppelspiegels angeordnet oder der Auskoppelspiegel selbst konvex ist und die Radien der konvexen bzw. konkaven Spiegel im Bereich von 10m bis 60m liegen.

Bei ganz besonders bevorzugten Ausführungsformen der Erfindung ist die Modenblende durch den lichten Innendurchmesser eines runden Abschnitts des Strahlführungsraums gebildet. Diese Maßnahme hat den Vorteil, daß sich im Gegensatz zu einer Lochblende außerhalb des durch den runden Abschnitt des Strahlführungsraums definierten Anregungsvolumens, d.h. außerhalb der Modenblende, kein angeregtes Lasergas mehr befindet, so daß es innerhalb des runden Abschnitts auch zu keiner unerwünschten Verstärkung kommen kann. Daher kann im Laserresonator ein scharf abgegrenzter Gauß-Mode erzeugt werden. Durch die verstellbare Optik läßt sich der Laserstrahl innerhalb des Strahlführungsraums auf solch einen Strahldurchmesser aufweiten, daß der lichte Innendurchmesser des runden Abschnitts des Strahlführungsraums für höhere Moden als Modenblende wirkt.

Der runde Abschnitt des Strahlführungsraums kann beispielsweise durch ein oder mehrere Laserrohre des Laserresonators und/oder durch einen zwei benachbarte Laserrohre miteinander verbindenden Verbindungsblock gebildet sein.

In einer weiteren Ausführungsform ist der Öffnungsdurchmesser der Modenblende zwischen zwei Einstellungen verstellbar, bei denen die Modenblende aus dem Laserstrahl Moden ab jeweils anderen höheren Ordnungen ausblendet.

Bei ganz besonders bevorzugten Ausführungsformen der Erfindung ist der Laserresonator in der einen Einstellung der Modenblende bzw. der Optik zur Erzeugung eines Gauß-Modes und in der anderen Einstellung zur Erzeugung eines Ringmodes ausgebildet. Diese Maßnahme ermöglicht die wahlweise Einstellung des Lasermodes mit Hilfe aufweitender und fokussierender optischer Elemente im Laserresonator, wobei der Laserstrahl durch diese optischen Elemente so geformt wird, daß der runde Abschnitt des Strahlführungsraums des Laserresonators bei aufgeweitetem Laserstrahl selbst als Modenblende wirkt. Entsprechend der jeweiligen Bearbeitungsaufgabe kann mit Hilfe einer Steuereinrichtung zwischen dem Gauß- oder dem Ringmode umgeschaltet werden. Dazu können in der Steuereinrichtung beispielsweise mindestens zwei Parametersätze für die beiden Einstellungen der Modenblende bzw. der Optik hinterlegt sein.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: ein erstes Ausführungsbeispiel des erfindungs- gemäßen Gaslasers mit zwei adaptiven optischen Elementen zur Erzeugung eines Gauß-Modes (Fig. 1a) oder eines Ringmodes (Fig. 1b);
- Fig. 2: ein zweites Ausführungsbeispiel des erfindungs- gemäßen Gaslasers mit drei adaptiven optischen Elementen zur Erzeugung eines Gauß-Modes (Fig. 2a) oder eines Ringmodes (Fig. 2b); und
- Fig. 3: ein drittes Ausführungsbeispiel des erfindungs- gemäßen Gaslasers mit drei adaptiven optischen Elementen zur Erzeugung eines Gauß-Modes (Fig. 3a) oder eines Ringmodes (Fig. 3b).

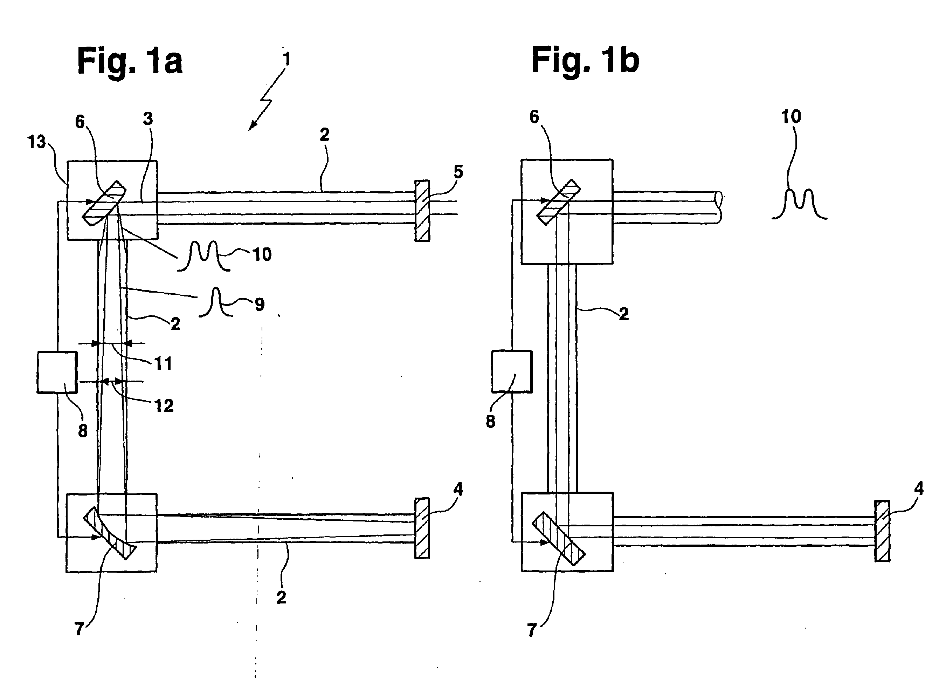

Der Laserresonator des in **Fig. 1** gezeigten Gaslasers 1 umfaßt drei Laserrohre **2,** die als Gehäuse für ein Lasergas, z.B. CO₂ oder CO, dienen. Die Laserrohre 2 haben einen runden Querschnitt und können aus Quarz oder Keramikmaterial bestehen. Zwei benachbarte Laserrohre sind jeweils im rechten Winkel zueinander angeordnet, so daß sich insgesamt eine U-förmige Anordnung ergibt. Der im Laserresonator erzeugte Laserstrahl **3** wird zwischen einem planen Rückspiegel **4** und einem planen Auskoppelspiegel **5** reflektiert und jeweils zwischen zwei Laserrohren 2 mit Hilfe von Umlenkspiegeln **6, 7** um 90° umgelenkt. Der gezeigte Strahlengang des Laserstrahls 3 ist stark vereinfacht dargestellt. Die beiden Umlenkspiegel 6, 7 sind adaptive Spiegel mit veränderlichen Krümmungsradien, welche von einer Steuereinrichtung **8** einstellbar sind.

Ausgehend vom Auskoppelspiegel 5 wird in der Anordnung nach Fig. 1a der Laserstrahl 3 an dem konvex eingestellten Umlenkspiegel 6 so weit aufgeweitet, daß bis auf den Gaußmode **9** alle anderen Moden des Laserstrahls 3, insbesondere auch der Ringmode **10,** durch das mittlere Laserrohr 2 aus dem Laserstrahl 3 ausgeblendet werden. Der Strahldurchmesser **11** des in das mittlere Laserrohr 2 eingekoppelten Laserstrahls 3 wird so auf den lichten Innendurchmesser **12** des mittleren Laserrohrs 2 begrenzt, d.h., das mittlere Laserrohr 2 wirkt als Modenblende. Es befindet sich kein angeregtes Lasergas außerhalb des Modenvolumens, so daß im Laserresonator ein scharf abgegrenzter Gauß-Mode 9 erzeugt wird. An dem konkav eingestellten Umlenkspiegel 7 wird der aufgeweitete Laserstrahl 3 so weit rückfokussiert, daß das zwischen Umlenkspiegel 7 und Rückspiegel 4 befindliche Laserrohr 2 nicht als Modenblende für den Gaußmode wirkt. Gleiches gilt für das zwischen Auskoppelspiegel 5 und Umlenkspiegel 6 befindliche Laserrohr 2. Im gezeigten Ausführungsbeispiel sind zwei benachbarte Laserrohre 2 jeweils über einen Verbindungsblock **13,** der Teil des Laserresonators ist, miteinander verbunden.

In der Anordnung nach Fig. 1b sind die adaptiven Umlenkspiegel 6, 7 als ebene Spiegel eingestellt, so daß es innerhalb des mittleren Laserrohrs 2 zu keiner Aufweitung des Laserstrahls 3 kommt. Der Laserresonator ist so ausgelegt, daß in diesem Fall der Ringmode 10 erzeugt wird. Durch einfaches "Umschalten" der adaptiven Spiegel 6, 7 kann im Laserresonator wahlweise der Gauß-Mode 9 oder der Ringmode 10 erzeugt werden.

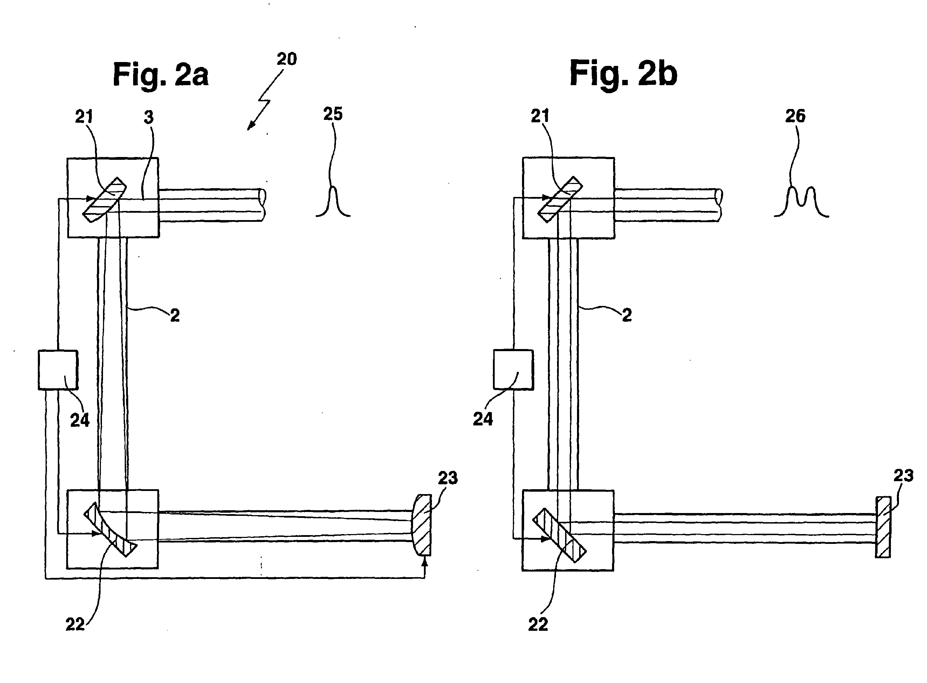

Der in **Fig. 2** gezeigte Gaslaser **20** verwendet zum Umschalten zwischen Gauß-Mode und Ringmode zwei adaptive Umlenkspiegel **21, 22** und einen adaptiven Rückspiegel **23,** deren Einstellungen jeweils von der Steuereinrichtung **24** gesteuert werden. Bei der in Fig. 2a gezeigten Anordnung mit konvexen bzw. konkaven Umlenkspiegeln 21, 22 und einem konvexen Rückspiegel 23 wird der Laserstrahl 3 im mittleren Laserrohr 2 für eine Modenbegrenzung aufgeweitet und daher im Laserresonator nur der Gauß-Mode **25** erzeugt. In der Anordnung nach Fig. 2b sind die Umlenkspiegel 21, 22 und der Rückspiegel 23 als ebene Spiegel eingestellt, so daß es innerhalb des mittleren Laserrohrs 2 zu keiner Aufweitung des Laserstrahls 3 kommt. Der Laserresonator ist so ausgelegt, daß in diesem Fall der Ringmode **26** erzeugt wird. Durch einfaches "Umschalten" der adaptiven Spiegel 21, 22, 23 kann im Laserresonator wahlweise der Gauß-Mode 25 oder der Ringmode 26 erzeugt werden.

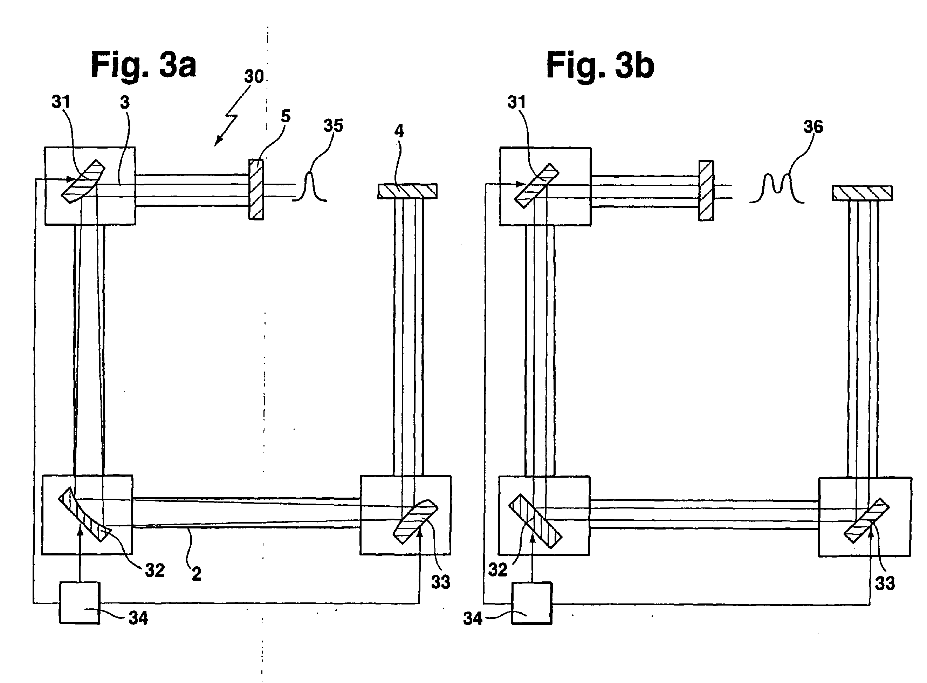

Der in Fig. 3 gezeigte Gaslaser **30** verwendet zum Umschalten zwischen Gauß-Mode und Ringmode drei adaptive Umlenkspiegel **31, 32, 33,** deren Einstellungen jeweils von der Steuereinrichtung **34** gesteuert werden. Bei der in Fig. 3a gezeigten Anordnung mit konvexen Umlenkspiegeln 31, 33 und einem konkaven Umlenkspiegel 32 wird der Laserstrahl 3 im Laserrohr 2 für eine Modenbegrenzung aufgeweitet und daher im Laserresonator nur der Gauß-Mode 35 erzeugt. Die Krümmungsradien der Umlenkspiegel 31, 32, 33 sind so gewählt, daß sich astigmatische Fehler kompensieren. In der Anordnung nach Fig. 3b sind alle Umlenkspiegel 31, 32, 33 als ebene Spiegel eingestellt, so daß es innerhalb des Laserrohrs 2 zu keiner Aufweitung des Laserstrahls 3 kommt. Der Laserresonator ist so ausgelegt, daß in diesem Fall ein Ringmode **36** erzeugt wird. Durch einfaches "Umschalten" der adaptiven Spiegel 31, 32, 33 kann im Laserresonator wahlweise der Gauß-Mode 35 oder der Ringmode 36 erzeugt werden.

## Patentansprüche

1. Gaslaser (1; 20; 30) mit einer Optik und mit einer im Strahlführungsraum des Laserresonators vorgesehenen Modenblende (2), die aus dem Laserstrahl (3) Moden ab höheren Ordnungen ausblendet,
**dadurch gekennzeichnet,**
**daß** die Optik mindestens zwei adaptive optische Elemente (6, 7; 21, 22, 23; 31, 32, 33) aufweist, die zwischen zwei Einstellungen verstellbar sind, bei denen die Modenblende (2) aus dem Laserstrahl (3) Moden ab jeweils anderen höheren Ordnungen ausblendet, wobei die Modenblende zwischen den genannten zwei adaptiven optischen Elementenangeordnet ist und die adaptiven optischen Elemente durch eine Steuereinrichtung (8; 24; 34) einstellbar sind, und wobei das eine adaptive optische Element zum Aufweiten des Laserstrahls und das andere adaptive optische Element zum Rückfokussieren des aufgeweiteten Laserstrahls dient.

2. Gaslaser nach Anspruch 1, **dadurch gekennzeichnet, daß** zumindest in einer der beiden Optikeinstellungen ein adaptives optisches Element (6; 21; 31) zur Aufweitung des Laserstrahls (3), insbesondere konvex, und ein anderes adaptives optisches Element (7; 22; 32) zur nachfolgenden Fokussierung des Laserstrahls (3), insbesondere konkav, ausgebildet ist.

3. Gaslaser nach Anspruch 1, **dadurch gekennzeichnet, daß** zumindest in einer der beiden Optikeinstellungen zwei adaptive optische Elemente (31, 33) zur Aufweitung des Laserstrahls (3), insbesondere konvex, und ein drittes adaptives optisches Element (32) zur Fokussierung des Laserstrahls (3), insbesondere konkav, ausgebildet sind.

4. Gaslaser nach einem der vorhergehenden Ansprüche, **dadurch gekennzeichnet, daß** als adaptives optisches Element der Auskoppelspiegel (5) des Laserresonators und/oder der Rückspiegel (4; 23) des Laserresonators und/oder ein oder mehrere dazwischen vorgesehene Umlenkspiegel (6, 7; 21, 22; 31, 32, 33) vorgesehen sind.

5. Gaslaser nach einem der vorhergehenden Ansprüche, **dadurch dadurch gekennzeichnet, daß** die Modenblende durch den lichten Innendurchmesser (12) eines runden Abschnitts des Strahlführungsraums gebildet ist.

6. Gaslaser nach Anspruch 5, **dadurch gekennzeichnet, daß** der runde Abschnitt des Strahlführungsraums durch ein oder mehrere Laserrohre (2) des Laserresonators und/oder durch einen zwei benachbarte Laserrohre (2) miteinander verbindenden Verbindungsblock (13) gebildet ist.

7. Gaslaser nach einem der vorhergehenden Ansprüche, **dadurch gekennzeichnet, daß** der Öffnungsdurchmesser der Modenblende zwischen zwei Einstellungen verstellbar ist, bei denen die Modenblende aus dem Laserstrahl (3) Moden ab jeweils anderen höheren Ordnungen ausblendet.

8. Gaslaser nach einem der vorhergehenden Ansprüche, **dadurch gekennzeichnet, daß** der Laserresonator in der einen Einstellung der Modenblende bzw. der Optik zur Erzeugung eines Gauß-Modes (9; 25; 35) und in der anderen Einstellung zur Erzeugung eines Ringmodes (10; 26; 36) ausgebildet ist.

9. Gaslaser nach einem der vorhergehenden Ansprüche, **gekennzeichnet durch** eine Steuereinrichtung (8; 24; 34) zum Verstellen der Modenblende bzw. der Optik, wobei für die beiden Einstellungen der Modenblende bzw. der Optik in der Steuereinrichtung (8; 24; 34) mindestens zwei Parametersätze hinterlegt sind.

## Claims

1. Gas laser (1; 20; 30) having an optics and a mode aperture (2) which is provided in the beam guiding chamber of the laser resonator and masks out higher-order modes from the laser beam (3),
**characterized in that** the optics comprises at least two adaptive optical elements (6, 7; 21, 22, 23; 31, 32, 33) which can be adjusted between two settings, in each of which said mode aperture (2) masks out modes of different higher orders from the laser beam (3), wherein the mode aperture is positioned between the said two adaptive optical elements, and the adaptive optical elements can be adjusted by a control device (8; 24; 34); and
wherein one adaptive optical element serves to expand the laser beam and the other adaptive optical element serves to re-focus the expanded laser beam.

2. Gas laser according to claim 1, **characterized in that** in at least one of the two settings of the optics, one adaptive optical element (6; 21; 31) is formed for expanding the laser beam (3), in particular, in a convex shape, and another adaptive optical element (7; 22; 32) is formed for subsequent focussing the laser beam (3), in particular, in a concave shape.

3. Gas laser according to claim 1, **characterized in that** in at least one of the two settings of the optics, two adaptive optical elements (31, 33) are formed for expanding the laser beam (3), in particular, in a convex shape, and a third adaptive optical element (32) is formed for focussing the laser beam (3), in particular, in a concave form.

4. Gas laser according to any one of the preceding claims, **characterized in that** the output mirror (5) of the laser resonator and/or the retro mirror (4; 23) of the laser resonator and/or one or more interpositioned deflection mirrors (6, 7; 21, 22; 31, 32, 33) are provided as adaptive optical element.

5. Gas laser according to any one of the preceding claims, **characterized in that** the mode aperture is formed by the clear inside diameter (12) of a round section of the beam guiding chamber.

6. Gas laser according to claim 5, **characterized in that** the round section of the beam guiding chamber is formed by one or more laser tubes (2) of the laser resonator and/or by a connecting block (13) that connects two neighboring laser tubes (2) to each other.

7. Gas laser according to any one of the preceding claims, **characterized in that** the opening diameter of the mode aperture can be adjusted between two settings, in which the mode aperture masks out modes of different higher orders from the laser beam (3).

8. Gas laser according to any one of the preceding claims, **characterized in that** in one of the settings of the mode aperture or optics, the laser resonator is configured for generating a Gaussian mode (9; 25; 35) and in the other setting, the laser resonator is configured for generating a ring mode (10; 26; 36).

9. Gas laser according to any one of the preceding claims, **characterized by** a control device (8; 24; 34) for adjusting the mode aperture or optics, wherein at least two sets of parameters are stored in the control device (8; 24; 34) for the two settings of the mode aperture or optics.

## Revendications

1. Laser à gaz (1 ; 20 ; 30) avec une optique et avec un diaphragme de mode (2) prévu dans la chambre de guidage de faisceau du résonateur laser, qui supprime ou masque du faisceau laser (3) des modes à partir d'ordres supérieurs,
**caractérisé en ce**
**que** l'optique présente au moins deux éléments optiques adaptatifs (6, 7 ; 21, 22, 23 ; 31, 32, 33) qui sont réglables entre deux réglages, dans lesquels le diaphragme de mode (2) supprime ou masque du faisceau laser (3) des modes à partir d'ordres supérieurs chaque fois différents, le diaphragme de mode étant disposé entre lesdits deux éléments optiques adaptatifs et les éléments optiques adaptatifs étant réglables par un dispositif de commande (8 ; 24 ; 34), et l'un des éléments optiques adaptatifs servant à élargir le faisceau laser et l'autre élément optique adaptatif à refocaliser le faisceau laser élargi.

2. Laser à gaz selon la revendication 1, **caractérisé en ce qu'**au moins dans un des deux réglages de l'optique, un élément optique adaptatif (6 ; 21 ; 31) est réalisé pour élargir le faisceau laser (3), étant en particulier de forme convexe, et un autre élément optique adaptatif (7 ; 22 ; 32) pour refocaliser ensuite le faisceau laser (3), étant en particulier de forme concave.

3. Laser à gaz selon la revendication 1 **caractérisé en ce qu'**au moins dans un des deux réglages de l'optique, deux éléments optiques adaptatifs (31, 33) sont réalisés pour élargir le faisceau laser (3), étant en particulier de forme convexe, et un troisième élément optique adaptatif (32) pour focaliser le faisceau laser (3), étant en particulier de forme concave.

4. Laser à gaz selon une des revendications précédentes, **caractérisé en ce qu'**il est prévu comme élément optique adaptatif le miroir de sortie (5) du résonateur laser et/ou le miroir de renvoi (4 ; 23) du résonateur laser et/ou un ou plusieurs miroirs de déviation (6, 7 ; 21, 22 ; 31, 32, 33) prévus entre les deux.

5. Laser à gaz selon une des revendications précédentes, **caractérisé en ce que** le diaphragme de mode est formé par le diamètre intérieur libre (12) d'une section ronde de la chambre de guidage de faisceau.

6. Laser à gaz selon la revendication 5, **caractérisé en ce que** la section ronde de la chambre de guidage de faisceau est formée par un ou plusieurs tubes laser (2) du résonateur laser et/ou par un bloc de jonction (13) joignant deux tubes laser (2) adjacents.

7. Laser à gaz selon une des revendications précédentes, **caractérisé en ce que** le diamètre d'ouverture du diaphragme de mode est réglable entre deux réglages, dans lesquels le diaphragme de mode supprime du faisceau laser (3) des modes à partir d'ordres supérieurs chaque fois différents.

8. Laser à gaz selon une des revendications précédentes, **caractérisé en ce que** le résonateur laser est réalisé pour générer un mode gaussien (9 ; 25 ; 35) dans un réglage du diaphragme de mode, respectivement de l'optique, et pour générer un mode annulaire (10 ; 26 ; 36) dans l'autre réglage.

9. Laser à gaz selon une des revendications précédentes, **caractérisé par** un dispositif de commande (8 ; 24 ; 34) pour régler le diaphragme de mode, respectivement l'optique, au moins deux jeux de paramètres étant stockés dans le dispositif de commande (8 ; 24 ; 34) pour les deux réglages du diaphragme de mode, respectivement de l'optique.
